Europäisches Patentamt

European Patent Office

Office européen des brevets

(11) Numéro de publication: **0 178 985**
**B1**

# FASCICULE DE BREVET EUROPÉEN

(45) Date de publication du fascicule du brevet:
**31.05.89**

(51) Int. Cl.⁴: **F 17 C 9/02**

(21) Numéro de dépôt: **85401940.3**

(22) Date de dépôt: **04.10.85**

(54) Appareil de réchauffage de fluide.

(30) Priorité: **17.10.84 FR 8415882**

(43) Date de publication de la demande:
**23.04.86 Bulletin 86/17**

(45) Mention de la délivrance du brevet:
**31.05.89 Bulletin 89/22**

(84) Etats contractants désignés:
**AT BE CH DE FR GB IT LI LU NL SE**

(56) Documents cité:
**WO-A-79/00056**
**FR-A-2 145 385**
**GB-A-1 117 813**
**US-A-3 738 353**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07 (FR)**

(72) Inventeur: **Delatte, Daniel, 5 B, avenue de Lattre de Tassigny, F-94100 Saint Maur (FR)**

(74) Mandataire: **Jacobson, Claude, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07 (FR)**

## Description

La présente invention est relative à un appareil de réchauffage de fluide cryogénique du type comprenant une enveloppe dans laquelle sont montés un dispositif d'injection d'un fluide de chauffage comportant au moins une rampe perforée horizontale, et un ensemble de tubes horizontaux de circulation du fluide à traiter (voir par exemple le WO-A-79/00056).

L'invention a pour but de fournir un appareil de ce type dont la construction soit plus facile et plus économique.

A cet effet, l'invention a pour objet un appareil de réchauffage du type précité, caractérisé en ce que le dispositif d'injection forme un châssis de support des tubes.

Il est à noter que le GB-A-1 117 813 décrit un appareil de réchauffage de fluide dans lequel un ensemble de tubes forme un châssis de support pour un autre ensemble de tubes horizontaux. Cependant, les tubes support sont verticaux et sont simplement parcourus par de l'eau de refroidissement, et le fluide chauffant circule dans des conduits indépendamment de ces tubes. De plus, ce GB-A ne concerne pas le réchauffage des fluides cryogéniques.

Suivant des caractéristiques avantageuses de l'invention:

- le dispositif d'injection est disposé dans un plan vertical médian de l'enveloppe. Cette disposition est optimale du point de vue des sollicitations mécaniques subies par le dispositif d'injection;
- lorsque l'appareil comporte plusieurs nappes de tubes, le dispositif d'injection comporte plusieurs rampes superposées adaptées pour injecter des débits différents de fluide de chauffage. On peut ainsi moduler de façon optimale l'apport de chaleur à chaque niveau de l'enveloppe;
- la ou chaque rampe présente de chaque côté une rangée de perforations.

On crée ainsi de très fortes turbulences dans l'enveloppe, ce qui favorise l'échange de chaleur;
- le dispositif d'injection est équpé de galets adaptés pour rouler et être guidés dans des moyens de guidage prévus dans l'enveloppe. Ceci permet de monter l'ensemble de l'appareil dans sa position couchée définitive, sans intervention d'engins de levage;
- lorsque le fluide de chauffage est de l'eau ou de la vapeur d'eau, l'enveloppe comporte à sa partie supérieure un trop-plein d'évacuation d'eau consistant en une tubulure qui pénètre sur une certaine hauteur dans l'enveloppe. L'enveloppe forme alors un vase d'expansion qui absorbe automatiquement les variations du débit d'eau de chauffage;
- l'enveloppe comprend une virole cylindrique et deux fonds, notamment bombés. Ceci facilite la construction de l'appareil et permet de le faire fonctionner sous une pression supérieure à la pression atmosphérique.

Un exemple de réalisation de l'invention va maintenant être décrit en regard des dessins annexês, sur lesquels:

- la figure 1 est une vue en élévation d'un appareil de réchauffage conforme à l'invention, l'enveloppe étant partiellement supprimée pour montrer l'agencement intérieur de l'appareil;
- la figure 2 est une vue de dessus du même appareil après suppression partielle de l'enveloppe;
- la figure 3 représente, dans sa moité gauche, une demi-vue en bout et en coupe prise suivant la ligne brisée A - A de la figure 1 et, dans sa moitié droite, une demi-vue en bout et en coupe prise suivant la ligne brisée B - B de la figure 1; et
- la figure 4 est une vue partielle d'une variante.

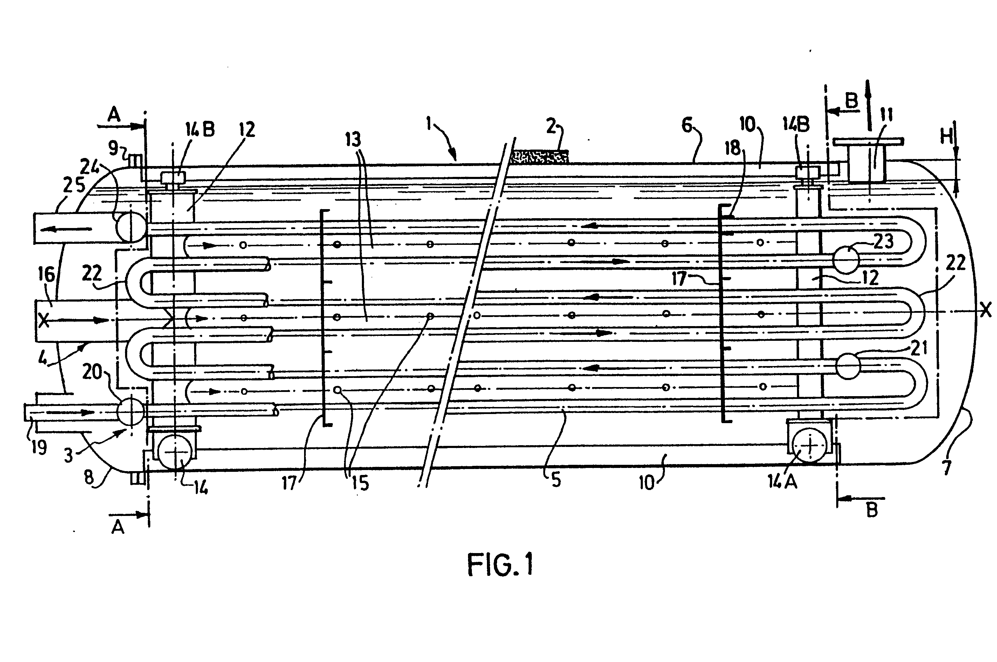

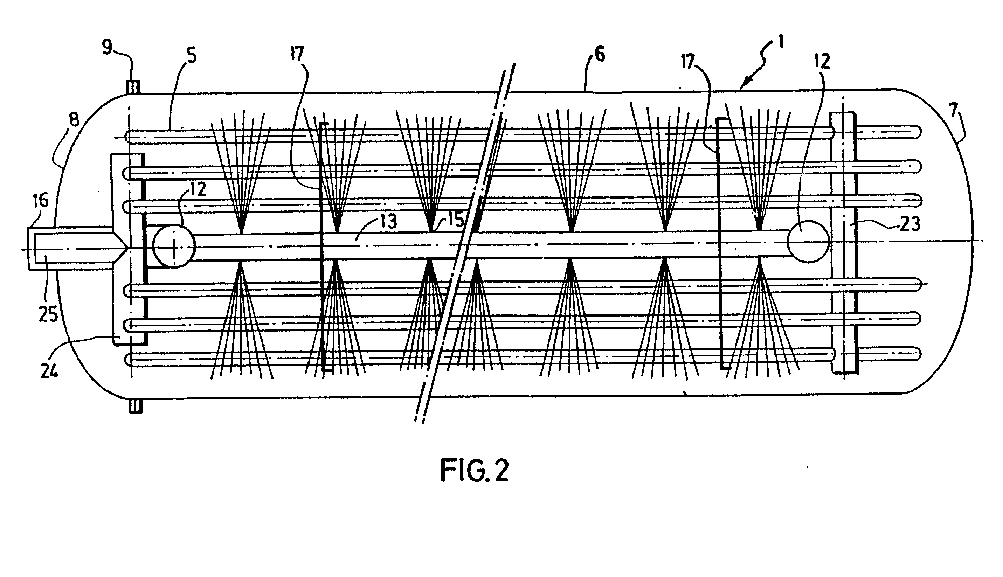

L'appareil de réchauffage représenté à figures 1 à 3 est destiné à vaporiser puis à réchauffer un liquide cryogénique tel que l'azote liquide, l'oxygène liquide, l'hydrogène liquide, l'argon liquide, etc... Cet appareil est constitué d'une enveloppe 1, éventuellement pourvue d'un calorifugeage 2, qui contient un équipage rigide 3, lui-même constitué pour l'essentiel d'un dispositif 4 d'injection d'eau de chauffage et d'une série de tubes 5 de circulation du fluide à réchauffer.

L'enveloppe 1 est constituée d'une virole cylindrique 6 d'axe X - X horizontal, fermée par deux fonds bombés 7 et 8, le fond 7 étant soudé à demeure et le fond 8 fixé de façon étanche et amovible par un assemblage à brides 9 et à boulons. Deux fers en U 10 sont fixés par leur âme sur les génératrices supérieure et inférieure de la virole 6, à l'intérieur de celle-ci, et une tubulure de trop-plein 11 traverse cette virole à sa partie supérieure, près du fond 7, en pénétrant sur une faible hauteur H à l'intérieur de la virole.

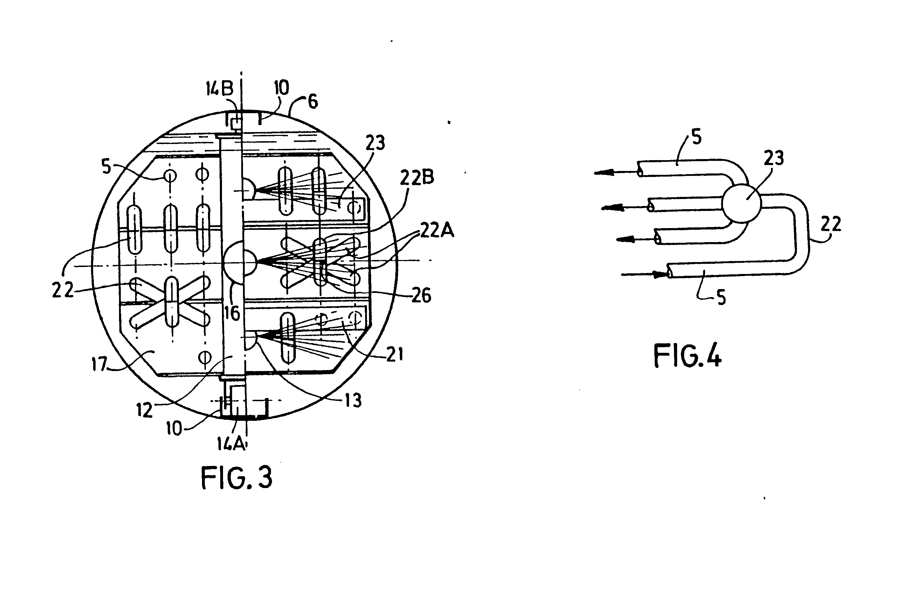

Le dispositif d'injection 4 est entièrement contenu dans le plan vertical médian de l'enveloppe 1, c'est-à-dire dans le plan vertical qui passe par l'axe X - X. Ce dispositif est constitué de deux montants verticaux creux 12 reliés par trois tuyaux horizontaux 13. Les montants 12, obturés à chaque extrémité, sont équipés chacun d'un galet inférieur 14A à axe horizontal adapté pour rouler sur l'âme du U 10 inférieur et d'un galet supérieur 14B à axe vertical adapté pour être guidé par les ailes du U 10 supérieur. Les tuyaux 13 présentent de chaque côté une rangée de perforations 15 situées dans leur plan diamétral horizontal, et ils constituent donc chacun une rampe d'injection d'eau dans l'appareil; un tuyau 16 d'alimentation en eau traverse le fond 8 suivant l'axe X - X et est relié au montant 12 adjacent. Sur la moitié droite de la figure 3, le montant correspondant a été supprimé pour illustrer le fonctionnement de l'appareil, qui sera décrit plus loin.

Sur les trois tuyaux 13 sont fixés par soudage plusieurs plaques-supports transversales 17, dont le contour (figure 3) épouse grossièrement le contour intérieur de la virole 6, avec un jeu important. Ces plaques sont percées d'autant de trous qu'il y a de tubes 5; chacun de ces trous est pourvu d'un collet 18, dont l'un a été illustré à la figure 1, et traversé à libre coulissement par un tube 5.

Les tubes 5 sont répartis en plusieurs nappes horizontales, au nombre de six dans l'exemple représenté. Le nombre de tubes de chaque nappe est choisi de manière à tenir compte de l'évolution du fluide traité et à utiliser au mieux l'espace disponible dans la virole 6. Ainsi, les nappes comprennent, de bas en haut: deux tubes dans la région inférieure, relativement étroite, de la virole; quatre fois six tubes dans la région moyenne, la plus large; et quatre tubes dans la région supérieure, de nouveau plus étroite.

L'entrée du liquide cryogénique à vaporiser s'effectue par une tubulure 19 qui traverse le fond 8 et aboutit à un premier collecteur transversal 20, lequel répartit le liquide dans les deux tubes de la nappe inférieure. Le liquide commence ainsi à se vaporiser et arrive, à l'autre extrémité de la virole, à un deuxième collecteur transversal 21 qui répartit le fluide dans les six tubes de la deuxième nappe. Puis le fluide parcourt les quatre nappes moyennes, le changement de direction s'effectuant à chaque extrémité de la virole par l'intermédiaire de coudes 22. Le fluide pénètre ensuite dans un troisième collecteur transversal 23, supposé au collecteur 21, qui le répartit dans les quatre tubes de la nappe supérieure. Il arrive enfin, à la température d'utilisation désirée, par exemple à la température ambiante, à un quatrième collecteur transversal 24, supposé au collecteur 20, pour être repris par une tubulure d'évacuation 25 qui traverse le fond 8.

Les tubulures 16, 19 et 25 sont soudées au fond 8 et font donc partie, avec celui-ci, de l'équipage 3 mentionné plus haut. Par ailleurs, les collecteurs 20, 21, 23 et 24 servent non seulement à répartir le fluide traité d'une nappe à une autre nappe ayant un nombre de tubes différent, mais également à amortir les pulsations de l'alimentation en liquide cryogénique. Pour cette raison, on peut ajouter à l'appareil d'autres collecteurs transversaux, servant uniquement à cette fonction d'amortissement.

On remarque qu'entre la nappe inférieure et la deuxième nappe, le fluide, en se vaporisant, augmente de volume, de sorte que le passage de deux à six tubes est favorable. Par contre, en haut de l'appareil, le passage de six à quatre tubes malgré la poursuite de la dilatation du fluide provoque une accélération de sa vitesse de circulation. Si, pour une application donnée, la vitesse de sortie est jugée excessive, on peut utiliser la variante de la figure 4, dans laquelle la nappe supérieure est subdivisée en plusieurs nappes ayant chacune moins de six tubes et branchées en parallèle sur le collecteur 23.

Comme on le voit à la figure 3, les tubes de certaines nappes sont reliés à ceux de nappes voisines par l'intermédiaire de coudes entrecroisés, qui peuvent être reliés à un collecteur à l'une de leurs extrémités. Ceci permet, pour une courbure donnée d'au moins certains des coudes 22, de rapprocher verticalement les nappes, et donc d'augmenter le nombre de tubes 5 que l'on peut loger dans la virole 6. Or on sait que les coudes réalisés par cintrage, sans soudure, ne peuvent descendre au-dessous d'un rayon de courbure minimal sans nécessiter une augmentation de l'épaisseur de parois des tubes que l'on cintre. On peut donc, grâce à l'utilisation de coudes entrecroisés, assurer une compacité élevée du faisceau de tubes 5 tout en économisant un grand nombre de soudures, à savoir celles correspondant aux coudes disposés obliquement. Dans l'ensemble illustré à la figure 3, quatre des six tubes des seconde, troisième et quatrième nappes sont ainsi reliés entre eux par des coudes obliques sans soudure 22A à grand rayon de courbure, les deux tubes restants étant reliés par des coudes verticaux 22B à petit rayon de courbure présentant une soudure médiane 26; à chaque extrémité de la virole 6, on voit ainsi deux groupes de trois coudes entrecroisés (deux coudes 22A, un coude 22B) formant, en vue en bout, une étoile à six branches. De nombreuses autres configurations peuvent bien entendu être envisagées.

Comme on le voit aux figures 1 et 3, les perforations des rampes 13 se trouvent à des niveaux intermédiaires entre les première et deuxième, troisième et quatrième, cinquième et sixième nappes. En service, l'eau de réchauffage, éventuellement chauffée au préalable par un dispositif approprié non représenté, est introduite dans l'appareil par la tubulure 16, distribuée par le montant 12 adjacent entre les trois rampes 13, et est injectée de chaque côté dans la virole par leurs perforations, à peu près horizonalement et entre les nappes de tubes 5. Ceci provoque une intense turbulence de l'eau contenue dans l'appareil, laquelle s'élève jusqu'au niveau de la tubulure 11 d'évacuation par trop-plein. Cette dernière peut déboucher sur une conduite d'évacuation de l'eau (eau perdue) ou sur une conduite de recyclage de l'eau pourvue d'une pompe de circulation et, éventuellement, d'un dispositif de réchauffage.

Grâce à la hauteur H de pénétration de la tubulure 11 dans la virole 6, un ciel gazeux est maintenu dans l'appareil; celui-ci forme ainsi un vase d'expansion qui compense automatiquement les variations du débit d'alimentation en eau.

Il est à noter que le diamètre et/ou le nombre des perforations 15 de chaque rampe 13 peuvent être choisis de façon à adapter le débit d'eau injecté par chaque rampe aux besoins en chaleur au niveau correspondant.

La construction de l'appareil est particulièrement commode: l'enveloppe cylindrique est facile et économique à réaliser et supporte d'elle-même un éventuel fonctionnement sous une pression supérieure à la pression atmosphérique, sans qu'aucun élément de renforcement soit nécessaire; l'équipage 3 peut être construit au niveau du sol, à plat, et être ensuite enfilé dans l'ensemble virole 6 - fond 7 par roulement des galets 14A et 14B dans les fers en U 10.

En variante, l'appareil peut être utilisé avec de la vapeur d'eau comme fluide de chauffage. Dans ce cas, seule la rampe 13 inférieure est perforée, et les montants 12 sont obturés juste au-dessus de cette rampe. Après avoir rempli d'eau l'appareil, la vapeur d'eau est injectée par cette rampe inférieure et se condense en brassant fortement la masse d'eau, l'excès d'eau s'évacuant par la tubulure 11 comme précedemment.

Bien entendu, comme il est classique dans cette technique, on peut prévoir des tubes 5 supplémentaires destinés à la mise en pression rapide du réservoir de stockage du liquide cryogénique.

**Revendications**

1. Appareil de réchauffage de fluide cryogénique, du type comprenant une enveloppe (1) dans laquelle sont montés un dispositif (4) d'injection d'un fluide de chauffage comportant au moins une rampe perforée horizontale (13), et un ensemble de tubes horizontaux (5) de circulation du fluide à traiter, caractérisé en ce que le dispositif d'injection (4) forme un châssis de support des tubes (5).

2. Appareil suivant la revendication 1, caractérisé en ce que le dispositif d'injection (4) est disposé dans un plan vertical médian de l'enveloppe (1).

3. Appareil suivant la revendication 2, à plusieurs nappes de tubes (5), caractérisé en ce que le dispositif d'injection (4) comporte plusieurs rampes (13) superposées.

4. Appareil suivant la revendicaton 3, caractérisé en ce que les rampes (13) sont adaptées pour injecter des débits différents de fluide de chauffage.

5. Appareil suivant la revendication 3, dans lequel le fluide de chauffage est de la vapeur d'eau, caractérisé en ce que seule la rampe inférieure comporte des perforations d'injection de vapeur d'eau.

6. Appareil suivant l'une quelconque des revendications 2 à 4, caractérisé en ce que la ou chaque rampe (13) présente de chaque côté une rangée de perforations (15).

7. Appareil suivant la revendication 6, caractérisé en ce que chaque rangée de perforations (15) se trouve en regard d'un intervalle séparant deux nappes superposées de tubes (5).

8. Appareil suivant l'une quelconque des revendications 1 à 7, caractérisé en ce que sur le dispositif d'injection (4) sont fixées des plaques-supports transversales (17) pourvues de trous, ces derniers étant traversés à coulissement par les tubes (5).

9. Appareil suivant l'une quelconque des revendications 1 à 8, caractérisé en ce que le dispositif d'injection (4) est équipé de galets (14A, 14B) adaptés pour rouler et être guidés dans des moyens de guidage (10) prévus dans l'enveloppe (1).

10. Appareil suivant l'une quelconque des revendications 1 à 9, dans lequel le fluide de chauffage est de l'eau en de la vapeur d'eau, caractérisé en ce que l'enveloppe (1) comporte à sa partie supérieure un trop-plein (11) d'évacuation d'eau.

11. Appareil suivant la revendication 10, caractérisé en ce que le trop-plein consiste en une tubulure (11) qui pénètre sur une certaine hauteur (H) dans l'enveloppe (1).

12. Appareil suivant l'une quelconque des revendications 1 à 11, caractérisé en ce que l'enveloppe (1) comprend une virole cylindrique (6) et deux fonds (7, 8), notamment bombés.

13. Appareil suivant la revendication 12, à plusieurs nappes de tubes (5), caractérisé en ce que le nombre de tubes de chaque nappe est adapté pour occuper l'essentiel de la largeur correspondante de la virole (6), des collecteurs horizontaux (20, 21, 23, 24) reliant au moins les nappes successives qui possèdent des nombres de tubes (5) différents.

14. Appareil suivant la revendication 13, caractérisé en ce que les nappes les plus proches de la sortie (11) du fluide de chauffage sont branchées en parallèle.

15. Appareil suivant l'une quelconque des revendications 1 à 14, à plusieurs nappes de tubes, caractérisé en ce que les tubes (5) d'au moins deux nappes sont reliés par l'intermédiaire de coudes entrecroisés (22).

**Patentansprüche**

1. Vorrichtung zum Erhitzen eines kryogenen Fluids mit einer Hülle (1), in welcher eine Vorrichtung (4) zum Einspritzen eines Erhitzungsfluids mit mindestens einer horizontalen, perforierten Rampe (13) und eine Gruppe von horizontalen Rohren (5) für die Zirkulation des zu behandelnden Fluids angebracht sind, dadurch gekennzeichnet, daß die Einspritzvorrichtung (4) einen Stützrahmen für die Rohre (5) bildet.

2. Vorrichtung nach Anspruch 1, dadurch gekennzeichnet, daß die Einspritzvorrichtung (4) in einer vertikalen Ebene in der Mitte der Hülle (1) angeordnet ist.

3. Vorrichtung nach Anspruch 2 mit mehreren Lagen von Rohren (5), dadurch gekennzeichnet, daß die Einspritzvorrichtung (4) mehrere übereinander angeordnete Rampen (13) aufweist.

4. Vorrichtung nach Anspruch 3, dadurch gekennzeichnet, daß die Rampen (13) geeignet sind, um unterschiedliche Durchsätze von Erhitzungsfluid einzuspritzen.

5. Vorrichtung nach Anspruch 3, in welcher das Erhitzungsfluid Wasserdampf ist, dadurch gekennzeichnet, daß nur die innere Rampe Einspritzperforationen für Wasserdampf aufweist.

6. Vorrichtung nach einem der Ansprüche 2 bis 4, dadurch gekennzeichnet, daß die oder jede Rampe (13) auf jeder Seite eine Reihe von Perforationen (15) aufweist.

7. Vorrichtung nach Anspruch 6, dadurch gekennzeichnet, daß jede Reihe von Perforationen (15) sich gegenüber einem Zwischenraum befindet, welcher zwei Lagen von übereinander angeordneten Rohren (5) trennt.

8. Vorrichtung nach einem der Ansprüche 1 bis 7, dadurch gekennzeichnet, daß an der Einspritzvorrichtung (4) transfersale Trägerplatten (17) befestigt sind, die mit Löchern versehen sind, welche durch die Rohre (5) mit Gleitführung durchquert werden.

9. Vorrichtung nach einem der Ansprüche 1 bis 8, dadurch gekennzeichnet, daß die Einspritzvorrichtung (4) mit Rollen (14A, 14B) ausgestattet ist, die zum Rollen geeignet sind und dazu, in Führungsmitteln (10) geführt zu werden, die in der Hülle (1) vorgesehen sind.

10. Vorrichtung nach einem der Ansprüche 1 bis 9, in welcher das Erhitzungsfluid Wasser oder Wasserdampf ist, dadurch gekennzeichnet, daß die Hülle (1) in ihrem oberen Teil einen Überlauf (10) für das Entleeren von Wasser aufweist.

11. Vorrichtung nach Anspruch 10, dadurch gekennzeichnet, daß der Überlauf aus einem Stutzen (11) besteht, der in einer gewissen Höhe (H) in die Hülle (1) eintritt.

12. Vorrichtung nach einem der Ansprüche 1 bis 11, dadurch gekennzeichnet, daß die Hülle (1) einen zylindrischen Ring (6) und zwei insbesondere bauchige Böden (7, 8) aufweist.

13. Vorrichtung nach Anspruch 12 mit mehreren Lagen von Rohren (5), dadurch gekennzeichnet, daß die Anzahl von Rohren jeder Lage geeignet ist, um die Hauptlänge des entsprechenden Ringes (6) zu besetzen, wobei horizontale Sammler (20, 21, 23, 24) die Verbindung mit mindestens den aufeinanderfolgenden Lagen schaffen, die unterschiedliche Anzahl von Rohren (5) besitzen.

14. Vorrichtung nach Anspruch 13, dadurch gekennzeichnet, daß die dem Erhitzungsfluidausgang (11) am nahesten liegenden Lagen parallelgeschaltet sind.

15. Vorrichtung nach einem der Ansprüche 1 bis 14 mit mehreren Rohrlagen, dadurch gekennzeichnet, daß die Rohre (5) von mindestens zwei Lagen mittels sich kreuzender Krümmer (22) verbunden sind.

## Claims

1. Apparatus for heating cryogenic fluid, of the type comprising a housing (1) wherein are installed a device (4) for injection of a heating fluid comprising at least one perforated horizontal distributor (13) and a set of horizontal tubes (5) for circulating the fluid to be treated, characterised in that the injection device (4) forms a supporting framework for the tubes (5).

2. Apparatus according to claim 1, characterised in that the injection device (4) is arranged in a central vertical plane of the housing (1).

3. Apparatus according to claim 2, having several layers of tubes (5), characterised in that the injection device (4) comprises several superposed distributors (13).

4. Apparatus according to claim 3 characterised in that the distributors (13) are adapted to inject different flow rates of heating fluid.

5. Apparatus according to claim 3, wherein the heating fluid is steam, characterised in that only the bottom distributor comprises steam injection perforations.

6. Apparatus according to any one of claims 2 to 4, characterised in that the or each distributor (13) has a row of perforations (15) on each side.

7. Apparatus according to claim 6, characterised in that each row of perforations (15) is situated in alignment with a gap separating two superposed layers of tubes (5).

8. Apparatus according to any one of claims 1 to 7, characterised in that transverse support plates (17) provided with holes, which latter are traversed by the tubes (5) in a sliding fit, are secured on the injection device (4).

9. Apparatus according to any one of claims 1 to 8, characterised in that the injection device (4) is provided with rollers (14A, 14B) adapted to roll and to be guided in guiding means (10) provided within the housing (1).

10. Apparatus according to any one of claims 1 to 9, wherein the heating fluid is water or steam, characterised in that the housing (1) has a water discharge overflow (11) in its upper part.

11. Apparatus according to claim 10, characterised in that the overflow (11) comprises a pipe (11) which penetrates into the housing (1) to a certain height (H).

12. Apparatus according to any one of claims 1 to 11, characterised in that the housing (1) comprises a cylindrical sleeve (6) and two ends (7, 8) more especially domed.

13. Apparatus according to claim 12, with several layers of tubes (5) characterised in that the number of tubes of each layer is adapted to occupy the major part of the corresponding width of the sleeve (6), horizontal collectors (20, 21, 23, 24) connecting at least the successive layers which have different numbers of tubes (5).

14. Apparatus according to claim 13, characterised in that the layers which are closest to the outlet (11) of the heating fluid are connected in parallel.

15. Apparatus according to any one of claims 1 to 14, with several layers of tubes, characterised in that the tubes (5) of at least two layers are connected by means of intersecting elbows (22).

FIG.1

FIG. 2

EP 0 178 985 B1

FIG.4

FIG.3